# EUROPÄISCHE PATENTSCHRIFT

(11) **EP 2 353 837 B1**
(45) Veröffentlichungstag und Bekanntmachung des Hinweises auf die Patenterteilung: **30.05.2012**
(21) Anmeldenummer: 11000576.6
(22) Anmeldetag: 25.01.2011
(51) Int. Cl.: B29C 45/27, B29C 45/73, B29C 45/74, H05B 3/48

(54) **Elektrische Heizvorrichtung mit Omega-Rohr**
Electric heating device with omega pipe
Dispositif de chauffage électrique doté d'un tuyau oméga

(30) Priorität: 29.01.2010 DE 202010001573 U
(43) Veröffentlichungstag der Anmeldung: 10.08.2011
(73) Patentinhaber: Türk + Hillinger GmbH, D-78532 Tuttlingen (DE)
(72) Erfinder: Schlipf, Andreas, 78532 Tuttlingen (DE)
(74) Vertreter: Patentanwälte Westphal, Mussgnug & Partner

(56) Entgegenhaltungen:
- EP-A1- 0 444 748
- EP-A1- 0 806 276
- WO-A1-94/25243
- WO-A2-2007/067353
- JP-A- 7 142 156

## Beschreibung

Die Erfindung betrifft eine elektrische Heizvorrichtung mit den Merkmalen des Oberbegriffs des Schutzanspruchs 1. Derartige Heizvorrichtungen werden beispielsweise zum Beheizen von Werkzeugen, Maschinenteilen und Geräten, insbesondere von Kunststoffspritzdüsen verwendet. Ihre Anwendung ist aber nicht auf diesen Zweck beschränkt; beispielsweise ist es möglich, Fluide durch Durchleitung durch diese Art von Heizvorrichtung auf eine gewünschte Temperatur zu bringen. Alternativ können auch stehende Fluide oder ein Dehnwachs auf eine gewünschte Temperatur gebracht werden.

Besonders populäre Ausführuhgsformen derartiger Heizvorrichtungen sind solche mit zylindrischer Geometrie. Heizvorrichtungen mit zylindrischer Geometrie sind beispielsweise aus der DE 201 09 413 U1, der EP 1 395 085 B1 oder der DE 103 33 206 B4 bekannt.

Die bekannten elektrischen Heizvorrichtungen bestehen in der Regel aus zwei beabstandet voneinander angeordneten Grenzflächen, insbesondere Rohren, zwischen denen ein in der Regel rohrförmiges Heizelement, das den eigentlichen Heizleiter umfasst, angeordnet ist. Es gibt auch Bauformen, bei denen die Rohre jeweils mit einer sie in ihrer Erstreckungsrichtung durchsetzenden Ausnehmung versehen sind, um die Möglichkeit zu schaffen, die Heizvorrichtung auf das zu beheizende Bauteil zu spannen, bei denen durch Wandflächen die Rohre miteinander verbunden werden müssen. Dies ist aber mit hohem Aufwand bei der Herstellung verbunden.

Aufgabe der Erfindung ist daher das Bereitstellen einer günstiger herzustellenden elektrischen Heizvorrichtung mit guten Heizeigenschaften.

Diese Aufgabe wird gelöst durch eine elektrische Heizvorrichtung mit den Merkmalen des Patentanspruchs 1 und ein Verfahren zur Herstellung einer elektrischen Heizvorrichtung mit den Merkmalen der Patentansprüche 17 oder 18. Vorteilhafte Ausgestaltungen der Erfindung sind den jeweiligen Unteransprüchen zu entnehmen.

Die erfindungsgemäße elektrische Heizvorrichtung, die insbesondere zur Beheizung von Oberflächen von Bauteilen, auf die die elektrische Heizvorrichtung aufgeschoben oder aufgelegt ist geeignet ist, hat einem inneren Mantel und einem äußeren Mantel, die ein doppelwandiges Rohr bilden, wobei das doppelwandige Rohr eine den inneren Mantel und den äußeren Mantel in Erstreckungsrichtung der elektrischen Heizvorrichtung vollständig durchsetzende Ausnehmung aufweist, die durch Wandflächen vom Raum zwischen dem inneren Mantel und dem äußeren Mantel abgegrenzt ist. Ferner hat sie wenigstens ein rohrförmiges Heizelement, das einen Metallmantel aufweist und das im Raum zwischen dem inneren Mantel und dem äußeren Mantel angeordnet ist. Dabei zeichnet sich die Heizvorrichtung erfindungsgemäß dadurch aus, dass der innere Mantel, der äußere Mantel und die Wandflächen zusammenhängend sind und aus einem einzigen Materialstück bestehen. Zusammenhängend bedeutet dabei, dass man bei einer gedachten Bewegung auf der jeweiligen Mantel- oder Wandfläche tangential zum Rand einer Schnittfläche durch das Rohr, insbesondere zumindest dann, wenn es sich um eine Querschnittsfläche handelt, ausgehend von einem Ausgangspunkt aus wieder an dem Ausgangspunkt ankommt.

Der Erfindung liegt somit die Erkenntnis zu Grunde, dass es möglich ist, die komplexe doppelwandige Struktur mit einer sie durchsetzenden Ausnehmung aus einem einzigen Materialstück anzufertigen und dabei trotzdem noch die Möglichkeit, zumindest das rohrförmige Heizelement im Rohr zwischen dem inneren Mantel und dem äußeren Mantel anzuordnen zu gewährleisten. Dadurch können zusätzliche Arbeitsgänge bei der Herstellung der Heizvorrichtung eingespart werden, was Kosten senkt.

Ein Rohr im Sinne dieser Erfindung muss also insbesondere keine durchbrechungsfreie Mantelfläche haben, insbesondere wird für die Struktur mit eine Ausnehmung, z.B. ein Schlitz oder Spalt, die Mantelfläche in axialer Richtung über ihre ganze Länge durchsetzt, die Struktur also z.B. durch Aufprägen einer konstanten Krümmung auf ein Metallband erzeugt werden kann, der Begriff Rohr verwendet, solange dadurch ein durch eine die innere Mantelfläche im wesentlichen umschlossener Raum entsteht, der insbesondere nur auf einem kleinen Winkelbereich des Rohrquerschnitts, z. B. von 10° oder weniger, durch die Ausnehmung durchbrochen wird. Ein entsprechendes doppelwandiges Rohr kann zum Beispiel durch Aufprägen einer Krümmung auf ein Metallband, dessen Seitenränder miteinander verbunden sind, hergestellt werden. Ebenso wenig ist diesem Begriff eine Einschränkung hinsichtlich des Querschnitts des Rohres zu entnehmen, insbesondere kann dieser nicht nur rund, sondern auch elliptisch, gewinkelt oder vieleckig sein. Auch eine Querschnitts- und insbesondere Durchmesservariation fällt darunter, zu dass konisch zulaufende Rohre ebenfalls unter dem Oberbegriff "Rohr" gefasst werden.

In unter dem Aspekt einer möglichst symmetrischen Beheizung des zu beheizenden Bauteils besonders bevorzugten Ausführungsform der elektrischen Heizvorrichtung sind die Wandflächen in Richtung zur Ausnehmung hin gekrümmt. Mit anderen Worten sind diese Grenzflächen von der Ausnehmung her betrachtet konvex. Bei dieser Ausgestaltung kann der gänzlich unbeheizt bleibende Bereich des zu beheizenden Bauteils möglichst gering gehalten werden.

Eine hinsichtlich der Zahl der nötigen Arbeitsschritte zur Herstellung der elektrischen Heizvorrichtung optimierte Ausführungsform der Erfindung erhält man dann, wenn das durch inneren Mantel, äußeren Mantel und Wandflächen gebildete doppelwandige Rohr ein gezogenes Rohr ist. Hierbei wird in der Regel ein vorzugsweise rundes Ausgangsrohr über Ziehwerkzeuge in die Omega-Form gezogen. Je nach Komplexität der Geometrie und der damit verbundenen Probleme bei der Herstellung kann es in Ausnahmefällen aber auch sinnvoll sein, das durch inneren Mantel, äußeren Mantel und Wandflächen gebildete doppelwandige Rohr als geschweißtes Rohr anzufertigen, also die Strukturen aus einem Blech so zu formen dass zwei Ränder des Bleches einander gegenüber liegen und diese dann miteinander zu verschweißen.

Besonders günstig ist es, wenn das doppelwandige Rohr stirnseitig eine Einführöffnung aufweist, durch die das rohrförmige Heizelement einzeln und/oder an einem Träger angeordnet in den Raum zwischen dem inneren Mantel und dem äußeren Mantel einführbar ist. Dadurch wird es möglich, das Heizelement in das fertige doppelwandige Rohr einzustecken, was eine stärkere Modularisierung der Fertigung erlaubt. Grundsätzlich ist es natürlich auch möglich, das rohrförmige Heizelement gemeinsam mit einem Vorläuferbauteil zum doppelwandigen Rohr umzuformen oder, z.B. bei der Verwendung von geschweißten Rohren, das Blech um das rohrförmige Heizelement herum zu formen.

Die Einbettung des rohrförmigen Heizelementes in ein Pulver oder in ein Granulat hat erhebliche Vorteile. Weder ist das Einbringen einer Nut in eine Platte erforderlich noch ist das Aufbringen so hohen Drucks notwendig, dass ein weitgehendes Eindrücken des rohrförmigen Heizelementes erfolgt, und ein Gussprozess wird vollständig vermieden. Ferner wird durch Verwendung eines Pulvers automatisch ein hoher Grad von Homogenität des thermischen Kontakts zwischen Heizelement und Umgebung erreicht. Besonders gute Ergebnisse lassen sich dabei überraschenderweise bei der Verwendung von Granulaten erzielen. Granulate unterscheiden sich von Pulvern durch ihre gröbere Struktur, die sich in größeren Körnern ausdrückt und lassen sich insbesondere durch Kornvergrößerungsprozesse aus Pulvern erzeugen. Besonders bevorzugt werden dabei Metallgranulate mit deren Ausdehnung in jeder beliebigen Raumrichtung zu einer mittleren Korngröße zwischen 0,03 und 1 mm führt.

Das Pulver oder Granulat kann beispielsweise aus einem Metall, insbesondere Aluminium, Messing oder Kupfer, aber auch aus einem Metalloxid, einem Quarzsand oder einer keramischen Masse bestehen. Besonders vorteilhaft ist es dabei, wenn doppelwandiges Rohr und Pulver oder Granulat aus demselben Werkstoff bestehen.

Um einen besonders guten Wärmeübertrag innerhalb der elektrischen Heizvorrichtung zu gewährleisten ist es sinnvoll, wenn die elektrische Heizvorrichtung ganz oder teilweise verdichtet ist.

Die elektrische Heizvorrichtung kann in ihrer geometrischen Ausgestaltung vorteilhaft an die Geometrie des zu beheizenden Bauteils angepasst sein. Sie kann insbesondere einen vom inneren Mantel und der Ausnehmung im inneren Mantel umgebenen Raum mit radialer Symmetrie vorsehen oder insgesamt radialsymmetrisch sein. In dieser Gestaltung ist auch möglich, konische Bauteile zu beheizen. Es kann aber auch zweckmäßig sein, dass der vom inneren Mantel und der Ausnehmung im inneren Mantel umgebene Raum oder die gesamte Heizvorrichtung zylindrisch ist oder dass der vom inneren Mantel und der Ausnehmung im inneren Mantel umgebene Raum oder die gesamte Heizvorrichtung eine ovale, eckige, gebogene, abgewinkelte oder elliptische Geometrie aufweist.

Je nach Anwendung kann es weiterhin vorteilhaft, den Raum zwischen dem inneren Mantel und dem äußeren Mantel des doppelwandigen Rohres dadurch von Umgebungseinflüssen zu schützen, dass es auf allen Seiten von Begrenzungsflächen umgeben ist. Insbesondere kann dazu ein einstückiger oder mehrstückiger Rahmen aus Metall, Glimmer, Kunststoff oder Keramik verwendet werden, der den mit dem mindestens einem Pulver oder Granulat befüllte Raum in den Erstreckungsrichtungen der mindestens zwei Begrenzungsflächen begrenzt. Im einfachen Fall einer aus zwei Rohren gebildeten Anordnung wird dieser einfach durch zwei Scheiben oder Ringe gebildet. Es ist aber beispielsweise auch möglich, eine derartige räumliche Begrenzung durch einen Verschluss unter Verwendung einer Vergussmasse, insbesondere Silikonkautschuk, Epoxidharz oder einer keramischen Kittmasse, zu erreichen.

Schließlich ist für einige Anwendungen von Vorteil, wenn die elektrische Heizvorrichtung mit mehreren verschiedenen Metallpulvern, insbesondere mit in mehreren verschiedenen Metallpulvern, die in verschiedenen Kammern der elektrischen Heizvorrichtung angeordnet sind, befüllt ist. Solche Kammern können beispielsweise durch das Vorsehen von Zwischenwänden zwischen dem äußeren und dem inneren Mantel erzeugt werden.

Durch Vorsehen mehrerer rohrförmiger Heizelemente lässt sich das erreichte Temperaturprofil weiter variieren.

Besonders bevorzugte Abmessungen des inneren Metallrohres liegen dann vor, wenn eine Innenkontur des inneren Metallrohres kleinere Ausmaße aufweist als das zu beheizende Bauteil und damit auf dieses spannbar ist. Alternativ ist es auch hilfreich, Spannelemente auf dem äußeren Metallrohr anzuordnen, mit denen die Heizvorrichtung auf das zu beheizende Bauteil gespannt werden kann.

Wenn zudem ein Mantelthermometer oder ein Thermoelement durch die Ausnehmung geführt ist, ist der Ersatz des Thermometers in Fall seines Versagens einfach und billig möglich. Alternativ kann das Mantelthermometer oder Thermoelement auch im Raum zwischen dem inneren Mantel und dem äußeren Mantel angeordnet sein. Lösbarkeit lässt sich bei dieser Ausgestaltung für das Mantelthermometer oder Thermoelement beispielsweise dadurch erreichen, dass es in einem im Raum zwischen innerem Mantel und äußerem Mantel angeordneten Führungsrohr geführt ist.

Besonders vorteilhaft ist es, wenn die elektrische Heizvorrichtung mindestens ein Fixierelement aufweist, die die relative Position von unterschiedlichen Abschnitten des rohrförmigen Heizelements, insbesondere von durch das rohrförmige Heizelement gebildeten Mäandern, zueinander festlegt. Bei dieser Ausgestaltung wird sichergestellt, dass etwaig während des Zusammenbaus oder Betriebs der elektrischen Heizvorrichtung auftretende mechanische Belastungen des rohrförmigen Heizelements dessen geometrischen Verlauf insbesondere der Länge des rohrförmigen Heizelements nach nicht verändern können, wodurch die angestrebte Wärmeverteilung prozesssicher erhalten werden kann.

In einer besonders einfachen Ausführungsform ist das Fixierelement als Kamm oder Draht ausgestaltet. Unter einem Kamm wird dabei insbesondere ein Materialstreifen verstanden, der entlang seiner Längserstreckung eine Reihe von Ausnehmungen aufweist, die den Materialstreifen senkrecht oder schräg zu seiner Erstreckungsrichtung durchsetzen und das rohrförmigen Heizelement, wenn es darin aufgenommen ist, in dieser Richtung fixieren.

Es kann aber auch vorteilhaft sein, beispielsweise wenn eine besondere Stabilität der elektrischen Heizvorrichtung angestrebt wird, wenn das Fixierelement ein Rohr mit einer das Rohr durchsetzenden Ausnehmung, die der Form des rohrförmigen Heizelements entspricht, ist.

Eine hinsichtlich des beanspruchten Bauraums besonders vorteilhafte Vorgehensweise liegt darin, das Fixierelement durch eine in dem inneren Mantel oder in dem äußeren Mantel eingebrachte Rille oder Nut auszubilden, sofern diese in Richtung auf den Raum, der zwischen dem inneren Mantel und dem äußeren Mantel liegt, geöffnet ist.

Vorteilhaft ist es weiter, wenn ein inneres Metallrohr, ein äußeres Metallrohr, eine Bodenscheibe oder eine anschlussseitige Endscheibe aus einem vorgespannten Material, insbesondere aus vorgespanntem Federstahl hergestellt ist. Dadurch kann ein hoher Spanndruck auf ein zu beheizendes Bauteil ausgeübt werden.

Bei einem besonders bevorzugten, insbesondere kostengünstigen erfindungsgemäßen Verfahren wird erst ein doppelwandiges Rohr mit einem inneren Mantel und einem äußeren Mantel, das eine den inneren Mantel und den äußeren Mantel in Erstreckungsrichtung der elektrischen Heizvorrichtung vollständig durchsetzende Ausnehmung aufweist, die durch Wandflächen vom Raum zwischen dem inneren Mantel und dem äußeren Mantel abgegrenzt ist und bei dem innerer Mantel, äußerer Mantel und die Wandflächen aus einem einzigen Materialstück gebildet sind, bereitgestellt und dann das rohrförmige Heizelement in eine stirnseitig am doppelwandigen Rohr vorgesehene Einführungsöffnung eingesteckt. Dabei kann ein fertig oder nahezu fertig geformtes Omega-Rohr als Meterware bereitgestellt werden und auf die gewünscht Länge gekürzt werden. Dann wird in das die Zielform der elektrischen Heizvorrichtung angepasste Omega-Rohr das an den Hohlraum des Omega-Rohres angepasste, rohrförmige elektrische Heizelement eingesteckt.

Ein alternatives Verfahren zur Herstellung erfindungsgemäßer elektrischer Heizvorrichtungen besteht darin, ein rohrförmiges elektrisches Heizelement in einen bereitgestellten Abschnitt eines Metallbandes, dessen Seitenränder miteinander verbunden sind, einzustecken und dann zumindest Heizelement und Metallband gemeinsam zu einem doppelwandigen Rohr mit einer den inneren Mantel und den äußeren Mantel des doppelwandigen Rohrs durchsetzenden Ausnehmung umzuformen.

In beiden Verfahren kann das rohrförmige Heizelement in ein Pulver oder Granulat eingebettet werden; im ersten Verfahren kann dies vor dem Umformen geschehen, alternativ in beiden Verfahren nach der Umformung. Dabei kann insbesondere durch eine Bodenscheibe eine im Wesentlichen senkrecht zur Erstreckungsrichtung der Heizvorrichtung verlaufende Verbindung zwischen dem inneren Mantel und dem äußeren Mantel oder zwischen den Flächen, die nach der Umformung den inneren Mantel und den äußeren Mantel bilden, hergestellt werden. Dann wird das nach dem Einführen des rohrförmigen Heizelements verbleibende Volumen zwischen innerem Mantel und äußerem Mantel oder zwischen den Flächen,die nach der Umformung den inneren Mantel und den äußeren Mantel bilden, vorzugsweise unter Rütteln, mit dem Pulver oder Granulat befüllt

Ebenfalls in beiden Verfahren kann das rohrförmige Heizelement vor dem Einstecken zunächst an einem Trägerelement angeordnet werden. Besonders gut eignet sich aber für derartige geträgerte rohrförmige Heizelemente das alternative Verfahren, da bei dieser Vorgehensweise vermieden werden kann, dass das Trägerelement auch noch umgeformt werden muss, was den notwendige Kraftaufwand reduziert und das Risiko einer Beschädigung des rohrförmigen Heizelements und des Trägerelements vermeidet.

Die Erfindung wird im Folgenden anhand von Zeichnungen näher erläutert. Es zeigen:

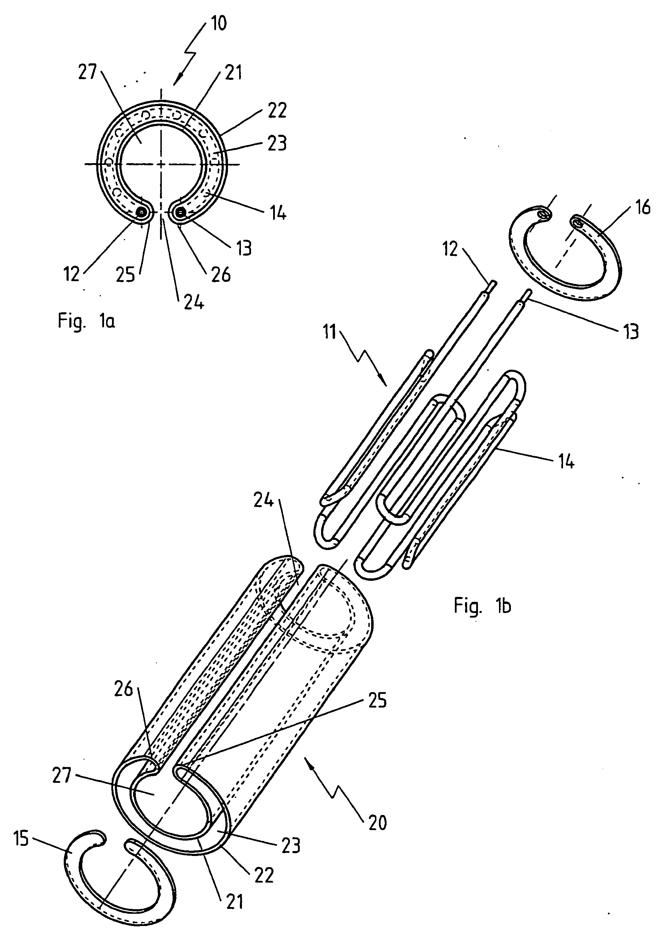

- Fig.1a:: Eine Schnittdarstellung einer elektrischen Heizvor- richtung gemäß einem Ausführungsbeispiel der Erfin- dung, geschnitten senkrecht zur Erstreckungsrichtung der elektrischen Heizvorrichtung und
- Fig.1b:: Eine Explosionsdarstellung der elektrischen Heizvor- richtung aus Figur 1a.

In allen Figuren werden identische Bezugszeichen für gleiche Bauelemente gleicher Ausführungsbeispiele verwendet.

Fig.1a zeigt eine Schnittdarstellung einer elektrischen Heizvorrichtung gemäß einem Ausführungsbeispiel der Erfindung, geschnitten senkrecht zur Erstreckungsrichtung der elektrischen Heizvorrichtung. Die elektrische Heizvorrichtung 10 weist ein doppelwandiges Rohr 20 mit einem inneren Mantel 21 und einem äußeren Mantel 22 auf, die zwischen ihnen einen Raum 23 definieren. Innerer Mantel 21 und äußerer Mantel 22 sind bezüglich des gezeigten Schnitts radialsymmetrisch und konzentrisch zueinander angeordnet, andere Geometrien sind aber möglich. Der innere Mantel 21 und der äußere Mantel 22 werden durch eine Ausnehmung 24 durchsetzt. Der Raum 23 ist durch Wandflächen 25,26, die in Figur 1a in Richtung zur Ausnehmung 24 hin gekrümmt sind, von der Ausnehmung getrennt. Der innere Mantel 21 und der Teil der Ausnehmung, der den inneren Mantel 21 durchsetzt, umgeben einen Raum 27, in den z.B. das zu beheizende Bauteil aufgenommen werden kann.

Ferner sieht man die Enden 12,13 eines rohrförmigen Heizelements 11, das, wie in Figur 1b deutlicher zu erkennen ist, mäanderförmig gebogen im Raum 23 angeordnet ist. Außer den Enden 12,13 des rohrförmigen Heizelements 11 sind gestrichelt die weiteren Windungen 14 des Heizelements 11 in Figur 1a dargestellt. Das rohrförmige Heizelement kann an einem nicht gezeigten Träger angeordnet sein. Im Raum 23 kann ferner ein nicht gezeigtes Pulver oder Granulat angeordnet werden.

Fig.1b zeigt eine Explosionsdarstellung der elektrischen Heizvorrichtung 10 aus Figur 1a, aus der besonders gut hervorgeht, dass die erfindungsgemäße Anordnung durch einfaches Ineinanderstecken zusammengefügt werden kann. Zusätzlich zu den bereits anhand der Figur 1a beschriebenen Bauteilen ist sind eine anschlussseitige Endscheibe 15 und eine bodenseitige Endscheibe 16 dargestellt, mit denen der Raum 23 verschlossen werden kann.

### Bezugszeichenliste

- 10: elektrische Heizvorrichtung
- 11: rohrförmiges Heizelement
- 12,13: Enden des rohrförmigen Heizelements
- 14: Windung des rohrförmigen Heizelements
- 15: bodenseitige Endscheibe
- 16: anschlussseitige Endscheibe
- 20: doppelwandiges Rohr
- 21: innerer Mantel
- 22: äußerer Mantel
- 23: Raum
- 24: Ausnehmung
- 25,26: Wandfläche
- 27: Raum

## Patentansprüche

1. Elektrische Heizvorrichtung (10), insbesondere zur Beheizung von Oberflächen von Bauteilen, auf die die elektrische Heizvorrichtung (10) aufgeschoben oder aufgelegt ist, mit
einem inneren Mantel (21) und einem äußeren Mantel (22), die ein doppelwandiges Rohr (20) bilden, wobei das doppelwandige Rohr (20) eine den inneren Mantel (21) und den äußeren Mantel (22) in Erstreckungsrichtung der elektrischen Heizvorrichtung (10) vollständig durchsetzende Ausnehmung (24) aufweist, die durch Wandflächen (25,26) vom Raum (23) zwischen dem inneren Mantel (21) und dem äußeren Mantel (22) abgegrenzt ist
und mit wenigstens einem rohrförmigen Heizelement (11), das einen Metallmantel aufweist, und das im Raum (23) zwischen dem inneren Mantel (21) und dem äußeren Mantel (22) angeordnet ist,
**dadurch gekennzeichnet, dass**
der innere Mantel (21), der äußere Mantel (22) und die Wandflächen (25,26) zusammenhängend sind und aus einem einzigen Materialstück bestehen.

2. Elektrische Heizvorrichtung (10) nach Anspruch 1,
**dadurch gekennzeichnet, dass**
die Wandflächen in Richtung zur Ausnehmung hin gekrümmt sind.

3. Elektrische Heizvorrichtung (10) nach Anspruch 1 oder 2,
**dadurch gekennzeichnet, dass**
das durch inneren Mantel, äußeren Mantel und Wandflächen gebildete doppelwandige Rohr ein gezogenes Rohr ist.

4. Elektrische Heizvorrichtung (10)nach Anspruch 1 oder 2,
**dadurch gekennzeichnet, dass**
das durch inneren Mantel (21), äußeren Mantel (22) und Wandflächen (25,26) gebildete doppelwandige Rohr (20) ein geschweißtes Rohr ist.

5. Elektrische Heizvorrichtung (10) einem der vorstehenden Ansprüche,
**dadurch gekennzeichnet, dass**
das doppelwandige Rohr (20) stirnseitig eine Einführöffnung aufweist, durch die das rohrförmige Heizelement (11) einzeln und/oder an einem Träger angeordnet in den Raum (23) zwischen dem inneren Mantel (21) und dem äußeren Mantel (22) einführbar ist.

6. Elektrische Heizvorrichtung (10) nach einem der vorstehenden Ansprüche,
**dadurch gekennzeichnet, dass**
das rohrförmige Heizelement (11) aus einer gebogenen, insbesondere mäanderförmig gebogenen, vorzugsweise verdichteten Rohrwendelpatrone oder aus einem gebogenen, insbesondere mäanderförmig gebogenen Rohrheizkörper besteht.

7. Elektrische Heizvorrichtung (10) nach einem der vorstehenden Ansprüche,
**dadurch gekennzeichnet, dass**
der Raum (23) zwischen dem inneren Mantel (21) und dem äußeren Mantel (22) des doppelwandigen Rohres (20) mit einem Pulver oder Granulat gefüllt ist.

8. Elektrische Heizvorrichtung (10) nach einem der vorstehenden Ansprüche,
**dadurch gekennzeichnet, dass**
die elektrische Heizvorrichtung (10) ganz oder teilweise verdichtet ist.

9. Elektrische Heizvorrichtung (10) nach Anspruch 7,
**dadurch gekennzeichnet, dass**
das doppelwandige Rohr (20) und das Pulver oder Granulat aus demselben Werkstoff bestehen.

10. Elektrische Heizvorrichtung (10)nach einem der vorstehenden Ansprüche,
**dadurch gekennzeichnet, dass**
die elektrische Heizvorrichtung (10) mit mehreren verschiedenen Metallpulvern, insbesondere mit in mehreren verschiedenen Metallpulvern, die in verschiedenen Kammern der elektrischen Heizvorrichtung (10) angeordnet sind, befüllt ist.

11. Elektrische Heizvorrichtung (10) nach einem der vorstehenden Ansprüche,
**dadurch gekennzeichnet, dass**
die elektrische Heizvorrichtung (10) mindestens ein Fixierelement aufweist, das die relative Position von unterschiedlichen Abschnitten des rohrförmigen Heizelements (11), insbesondere von durch das rohrförmige Heizelement (11) ausgeformten Mäandern, zueinander festlegt.

12. Elektrische Heizvorrichtung (10) nach Anspruch 11,
**dadurch gekennzeichnet, dass**
das mindestens eine Fixierelement als Kamm oder Draht ausgestaltet ist.

13. Elektrische Heizvorrichtung (10) nach Anspruch 11,
**dadurch gekennzeichnet, dass**
das mindestens eine Fixierelement ein an die Form des doppelwandigen Rohres (20) angepasstes Rohr mit einer das Rohr durchsetzenden Ausnehmung, die der Form des rohrförmigen Heizelements entspricht, ist.

14. Elektrische Heizvorrichtung (10) nach Anspruch 11,
**dadurch gekennzeichnet, dass**
das Fixierelement durch eine in den inneren Mantel oder in den äußeren Mantel eingebrachte Rille oder Nut, die in Richtung auf den Raum zwischen innerem Mantel und äußerem Mantel geöffnet ist, gebildet wird.

15. Elektrische Heizvorrichtung (10) nach einem vorstehenden Anspruch,
**dadurch gekennzeichnet, dass**
das doppelwandige Rohr (20) oder eine bodenseitige Endscheibe (15) oder eine anschlussseitige Endscheibe (16) aus einem vorgespannten Material, insbesondere aus vorgespanntem Federstahl besteht.

16. Elektrische Heizvorrichtung (10) nach einem vorstehenden Anspruch,
**dadurch gekennzeichnet, dass**
das doppelwandige Rohr (20) und/oder eine bodenseitige Endscheibe (15) und/oder eine anschlussseitige Endscheibe (16) aus einem Material mit geringerem Wärmeausdehnungskoeffizienten als das zu beheizende Bauteil besteht.

17. Elektrische Heizvorrichtung (10) nach einem vorstehenden Anspruch,
**dadurch gekennzeichnet, dass**
das doppelwandige Rohr (20) mit äußerem Mantel (22), innerem Mantel (22) und Wandflächen (25, 26) fertig oder nahezu fertig bereitgestellt ist und das an die Zielform der elektrischen Heizvorrichtung (10) angepasste doppelwandige Rohr in das rohrförmige elektrische Heizelement (11) eingesteckt ist.

18. Verfahren zur Herstellung einer elektrischen Heizvorrichtung nach einem der Ansprüche 1 bis 17, umfassend die Schritte
Einstecken eines rohrförmigen elektrischen Heizelements in einen bereitgestellten Abschnitt eines Metallbandes, dessen Seitenränder miteinander verbunden sind, und
gemeinsames Umformen zumindest des Heizelements und des Metallbands zu einem doppelwandigen Rohr mit einer den inneren Mantel und den äußeren Mantel des doppelwandigen Rohrs durchsetzenden Ausnehmung.

19. Verfahren zur Herstellung einer elektrischen Heizvorrichtung nach einem der Ansprüche 1 bis 17, umfassend die Schritte
Bereitstellen eines doppelwandigen Rohrs mit einem inneren Mantel und einem äußeren Mantel, das eine den inneren Mantel und den äußeren Mantel in Erstreckungsrichtung der elektrischen Heizvorrichtung vollständig durchsetzende Ausnehmung aufweist, die durch Wandflächen vom Raum zwischen dem inneren Mantel und dem äußeren Mantel abgegrenzt ist und bei dem innerer Mantel, äußerer Mantel und die Wandflächen aus einem einzigen Materialstück gebildet sind und
Einstecken des rohrförmigen Heizelements in eine stirnseitig am doppelwandigen Rohr vorgesehene Einführungsöffnung.

## Claims

1. An electrical heating apparatus (10), in particular for heating surfaces of components on which the electrical heating apparatus (10) is pressed or laid, with
an inner sheath (21) and an outer sheath (22) which form a double-walled tube (20), wherein the double-walled tube (20) has a recess (24) which passes completely through the inner sheath (21) and the outer sheath (22) in the extension direction of the electrical heating apparatus (10) and which is bounded by wall faces (25, 26) from the space (23) between the inner sheath (21) and the outer sheath (22),
and with at least one tubular heating element (11) which has a metallic sheath and which is arranged in the space (23) between the inner sheath (21) and the outer sheath (22),
**characterized in that** the inner sheath (21), the outer sheath (22) and the wall faces (25, 26) are continuous and comprise a single piece of material.

2. An electrical heating apparatus (10) according to claim 1, **characterized in that** the wall faces are curved in the direction towards the recess.

3. An electrical heating apparatus (10) according to claim 1 or 2, **characterized in that** the double-walled tube formed by the inner sheath, the outer sheath and the wall faces is a drawn tube.

4. An electrical heating apparatus (10) according to claim 1 or 2, **characterized in that** the double-walled tube (20) formed by the inner sheath (21), the outer sheath (22) and the wall faces (25, 26) is a welded tube.

5. An electrical heating apparatus (10) according to any one of the preceding claims, **characterized in that** the end face of the double-walled tube (20) has an insertion opening through which the tubular heating element (11) is capable of being introduced individually and/or arranged on a carrier into the space (23) between the inner sheath (21) and the outer sheath (22).

6. An electrical heating apparatus (10) according to any one of the preceding claims, **characterized in that** the tubular heating element (11) comprises a bent tubular coil cartridge, in particular bent into a meander shape and preferably compressed, or a bent tubular heating body, in particular bent into a meander shape.

7. An electrical heating apparatus (10) according to any one of the preceding claims, **characterized in that** the space (23) between the inner sheath (21) and the outer sheath (22) of the double-walled tube (20) is filled with a powder or granulate.

8. An electrical heating apparatus (10) according to any one of the preceding claims, **characterized in that** the electrical heating apparatus (10) is compressed completely or in part.

9. An electrical heating apparatus (10) according to claim 7, **characterized in that** the double-walled tube (20) and the powder or granulate consist of the same material.

10. An electrical heating apparatus (10) according to any one of the preceding claims, **characterized in that** the electrical heating apparatus (10) is filled with a multiplicity of different metallic powders, in particular with a multiplicity of different metallic powders which are arranged in different chambers of the electrical heating apparatus (10)

11. An electrical heating apparatus (10) according to any one of the preceding claims, **characterized in that** the electrical heating apparatus (10) has at least one fixing element which sets the relative position of different portions of the tubular heating element (11), in particular of meander shapes formed by the tubular heating element (11), with respect to one another.

12. An electrical heating apparatus (10) according to claim 11, **characterized in that** the at least one fixing element is designed in the form of a comb or wire.

13. An electrical heating apparatus (10) according to claim 11, **characterized in that** the at least one fixing element is a tube adapted to the shape of the double-walled tube (20) and having a recess which passes through the tube and which corresponds to the shape of the tubular heating element.

14. An electrical heating apparatus (10) according to claim 11, **characterized in that** the fixing element is formed by a channel or groove which is formed in the inner sheath or in the outer sheath and which is opened in the direction towards the space between the inner sheath and the outer sheath.

15. An electrical heating apparatus (10) according to a preceding claim, **characterized in that** the double-walled tube (20) or an end plate (15) on the base or an end plate (16) on the attachment side consists of a pre-stressed material, in particular of pre-stressed spring steel.

16. An electrical heating apparatus (10) according to a preceding claim, **characterized in that** the double-walled tube (20) and/or an end plate (15) on the base and/or an end plate (16) on the attachment side consists of a material with a lower coefficient of thermal expansion than the component to be heated.

17. An electrical heating apparatus (10) according to a preceding claim, **characterized in that** the double-walled tube (20) is produced in a finished manner or in a virtually finished manner with the outer sheath (22), the inner sheath (22) [*sic*] and the wall faces (25, 26), and the double-walled tube adapted to the target shape of the electrical heating apparatus (10) is inserted into the tubular heating element (11).

18. A method of producing an electrical heating apparatus according to any one of claims 1 to 17, comprising the steps
insertion of a tubular electrical heating element into a prepared portion of a metallic strip, the lateral edges of which are joined together, and joint shaping at least of the heating element and the metallic strip to form a double-walled tube with a recess which passes through the inner sheath and the outer sheath of the double-walled tube.

19. A method of producing an electrical heating apparatus according to any one of claims 1 to 17, comprising the steps
production of a double-walled tube with an inner sheath and an outer sheath, which has a recess which passes completely through the inner sheath and the outer sheath in the extension direction of the electrical heating apparatus and which is bounded by wall faces from the space between the inner sheath and the outer sheath, and in which the inner sheath, the outer sheath and the wall faces are formed from a single piece of material, and
insertion of the tubular heating element into an insertion opening provided on the end face of the double-walled tube.

## Revendications

1. Dispositif de chauffage électrique (10) notamment pour chauffer la surface de pièces glissées ou appliquées sur le dispositif de chauffage électrique (10) comprenant :
une enveloppe intérieure (21) et une enveloppe extérieure (22) formant un tube à double paroi (20),
le tube à double paroi (20) ayant une cavité (24) traversant complètement l'enveloppe intérieure (21) et l'enveloppe extérieure (22) dans le sens de l'extension du dispositif de chauffage électrique (10), cette cavité étant délimitée par les surfaces de paroi (25, 26) de l'espace (23) entre l'enveloppe intérieure (21) et l'enveloppe extérieure (22), et
au moins un élément chauffant (11) tubulaire ayant une enveloppe métallique et installé dans l'espace (23) entre l'enveloppe intérieure (21) et l'enveloppe extérieure (22),
dispositif de chauffage électrique **caractérisé en ce que**
l'enveloppe intérieure (21) et l'enveloppe extérieure (22) ainsi que les surfaces de paroi (25, 26) sont reliées et réalisées en une même pièce de matière.

2. Dispositif de chauffage électrique (10) selon la revendication 1,
**caractérisé en ce que**
les surfaces de paroi sont cintrées en direction du dégagement.

3. Dispositif de chauffage électrique (10) selon la revendication 1 ou 2,
**caractérisé en ce que**
le tube à double paroi formé par l'enveloppe intérieure, l'enveloppe extérieure et les surfaces de paroi est un tube étiré.

4. Dispositif de chauffage électrique (10) selon la revendication 1 ou 2,
**caractérisé en ce que**
l'enveloppe intérieure (21) et l'enveloppe extérieure (22) et les surfaces de paroi (25, 26) forment un tube à double paroi (20) qui est un tube soudé.

5. Dispositif de chauffage électrique (10) selon l'une des revendications précédentes,
**caractérisé en ce que**
le tube à double paroi (20) comporte sur son côté frontal un orifice d'introduction à travers lequel l'élément chauffant (11), tubulaire seul et/ou sur un support est installé séparément dans l'espace (23) compris entre au moins l'enveloppe intérieure (21) et l'enveloppe extérieure (22).

6. Dispositif de chauffage électrique (10) selon l'une des revendications précédentes,
**caractérisé en ce que**
l'élément chauffant tubulaire (11) est constitué par une cartouche à hélice tubulaire recourbée, notamment recourbée en forme de méandres et de préférence une cartouche à hélice tubulaire compactée ou en un corps de chauffe, recourbé, notamment recourbé en forme de méandres.

7. Dispositif de chauffage électrique (10) selon l'une des revendications précédentes,
**caractérisé en ce que** l'espace (23) entre l'enveloppe intérieure (21) et l'enveloppe extérieure (22) du tube à double paroi (20) est rempli de poudre ou de granulés.

8. Dispositif de chauffage électrique (10) selon l'une des revendications précédentes,
**caractérisé en ce que**
le dispositif de chauffage électrique (10) est compacté totalement ou partiellement.

9. Dispositif de chauffage électrique (10) selon la revendication 7,
**caractérisé en ce que**
le tube à double paroi (20) et la poudre ou les granulés sont réalisés dans le même matériau.

10. Dispositif de chauffage électrique (10) selon l'une des revendications précédentes,
**caractérisé en ce que**
le dispositif de chauffage électrique (10) est rempli de plusieurs poudres métalliques différentes notamment de plusieurs poudres métalliques différentes placées dans des chambres différentes du dispositif de chauffage électrique (10).

11. Dispositif de chauffage électrique (10) selon l'une des revendications précédentes,
**caractérisé en ce que**
le dispositif de chauffage électrique (10) comporte au moins un élément de fixation qui fixe la position relative de segments différents de l'élément chauffant tubulaire (11) notamment de méandres formés par l'élément chauffant tubulaire (11).

12. Dispositif de chauffage électrique (10) selon la revendication 11,
**caractérisé en ce qu'**
au moins l'élément de fixation est sous la forme d'un peigne ou d'un fil.

13. Dispositif de chauffage électrique (10) selon la revendication 11,
**caractérisé en ce qu'**
au moins un élément de fixation comporte un tube adapté à la forme du tube à double paroi (20) avec une cavité traversant le tube et correspondant à la forme de l'élément chauffant tubulaire.

14. Dispositif de chauffage électrique (10) selon la revendication 11,
**caractérisé en ce que**
l'élément de fixation est formé par une nervure ou une rainure réalisée dans l'enveloppe intérieure ou dans l'enveloppe extérieure et qui est ouverte en direction de l'espace compris entre l'enveloppe intérieure et l'enveloppe extérieure.

15. Dispositif de chauffage électrique (10) selon l'une des revendications précédentes,
**caractérisé en ce que**
le tube à double paroi (20) ou un élément plat d'extrémité (15) côté fond ou un élément plat d'extrémité (16) côté branchement est réalisé en un matériau précontraint notamment en acier à ressort précontraint.

16. Dispositif de chauffage électrique (10) selon l'une des revendications précédentes,
**caractérisé en ce que**
le tube à double paroi (20) et/ou un disque d'extrémité côté fond (15) et/ou un disque d'extrémité (16) côté branchement se compose d'un matériau à faible coefficient de dilatation thermique plus faible que celui de la pièce à chauffer.

17. Dispositif de chauffage électrique (10) selon l'une des revendications précédentes,
**caractérisé en ce que**
le tube à double paroi (20) avec l'enveloppe extérieure (22) ou une enveloppe intérieure (21) et des surfaces de paroi (25, 26), est réalisé ou est pratiquement réalisé complètement et le tube à double paroi adapté à la forme définitive du dispositif de chauffage électrique (10), est engagé l'élément chauffant électrique (11) de forme tubulaire.

18. Procédé de fabrication d'un dispositif de chauffage électrique selon l'une des revendications 1 à 17, comprenant les étapes suivantes :
engager un élément chauffant électrique tubulaire dans un segment d'une bande métallique fournie dont les bords latéraux sont reliés les uns aux autres, et
transformer en commun au moins l'élément chauffant et le ruban métallique pour former un tube à double paroi avec un dégagement traversant l'enveloppe intérieure et l'enveloppe extérieure du tube à double paroi.

19. Procédé de fabrication d'un dispositif de chauffage électrique selon l'une des revendications 1 à 17, comprenant les étapes suivantes :
fournir un tube à double paroi ayant une enveloppe intérieure et une enveloppe extérieure et un dégagement traversant complètement l'enveloppe intérieure et
l'enveloppe extérieure dans le sens de l'extension du dispositif de chauffage électrique, ce dégagement étant délimité par des surfaces de paroi du tube entre l'enveloppe intérieure et l'enveloppe extérieure et
les surfaces de paroi sont réalisées dans la même pièce de matériau, et
engager l'élément chauffant tubulaire dans une ouverture d'introduction, côté frontal du tube à double paroi.
